(19) Europäisches Patentamt

European Patent Office

Office européen des brevets

(11) **EP 3 892 580 B1**

(12) **EUROPEAN PATENT SPECIFICATION**

(45) Date of publication and mention
   of the grant of the patent:
   **09.10.2024 Bulletin 2024/41**

(21) Application number: **20168316.6**

(22) Date of filing: **06.04.2020**

(51) International Patent Classification (IPC):
   **B66B 5/18** *(2006.01)*    **H01F 7/18** *(2006.01)*

(52) Cooperative Patent Classification (CPC):
   **B66B 5/18;** H01F 2007/185

(54) **ELECTRONIC SAFETY ACTUATOR FOR AN ELEVATOR SAFETY BRAKE AND METHOD OF DETECTING POSITION OF AN ELECTRONIC SAFETY ACTUATOR**

   ELEKTRONISCHER SICHERHEITSAKTUATOR FÜR EINE AUFZUGSICHERHEITSBREMSE UND VERFAHREN ZUR ERKENNUNG DER POSITION EINES ELEKTRONISCHEN SICHERHEITSAKTUATORS

   ACTIONNEUR DE SECURITE ELECTRONIQUE POUR UN FREIN DE SECURITE D'ASCENSEUR ET PROCEDE DE DETECTION DE LA POSITION D'UN ACTIONNEUR DE SECURITE ELECTRONIQUE

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
   **13.10.2021 Bulletin 2021/41**

(73) Proprietor: **Otis Elevator Company
   Farmington, Connecticut 06032 (US)**

(72) Inventor: **TUTAT, Andreas
   13507 Berlin (DE)**

(74) Representative: **Dehns
   St. Bride's House
   10 Salisbury Square
   London EC4Y 8JD (GB)**

(56) References cited:
   **EP-A1- 1 749 784    EP-A1- 3 617 120
   WO-A1-2019/197226   DE-A1- 102006 035 225**

EP 3 892 580 B1

## Description

Technical Field

The present disclosure relates to a detector for detecting the position of a brake, in particular to a contactless detector which detects changes in electrical properties rather than a mechanical switch.

Background

Elevator safety brakes are normally mounted on the frame of an elevator car or counterweight and engage with a rail mounted to a wall of the hoistway so as to provide friction and stop the car or counterweight. Mechanical safety actuators are activated through a mechanical linkage which is triggered through a governor apparatus or the like. An alternative to mechanical safety actuators is to use electronic safety actuators which actuate the brake electrically and therefore do not require the mechanical connection from the governor, through the mechanical linkages. In the case of electronic safety actuators, these are typically actuated (i.e. when braking is required) through electrical means such as a solenoid. For example, when an overspeed event is detected, a controller sends an electrical signal to cause the solenoid to release an actuator component that engages the safety brake. In one possible arrangement the actuator component is a magnet that can be engaged with the guide rail so as to create friction that pulls a connecting lever that in turn pulls a safety wedge or safety roller into contact with the guide rail. Such safety wedges or safety rollers are self-engaging after contact with the rail and provide the braking force that stops the elevator car.

It will be appreciated that the solenoid may be used to actively drive the component (e.g. magnet) towards the guide rail so as to engage the brake (i.e. the solenoid applying a repulsive force), or it may be that the solenoid holds the component (e.g. magnet) in place during normal (non-braking) operation (i.e. the solenoid applying an attractive force) and that upon deactivation of the solenoid, the component then naturally engages with the guide rail (either through its own magnetism or under the force of a separate biasing member such as a spring).

Whichever arrangement is used, it is normally convenient that a power failure causes the release of the component so that power failure will cause the brake to engage for safety reasons.

It is also necessary to monitor the state of the actuator, i.e. whether it is engaged (causing engagement of the brake) or disengaged (not causing engagement of the brake). Such monitoring is desirable so as to detect a possible accidental engagement of the actuator. Such an actuator engagement would of course cause engagement of the corresponding safety brake. If this were to occur on one safety brake (e.g. on one side of the car) it would be desirable to immediately activate the other safety brake (or brakes) to stop the car without overloading one brake.

Existing electronic safety actuators typically use a mechanical switch to monitor the state of the safety actuator. When the actuator is engaged so as to cause braking, the mechanical switch is tripped (changes state between open and closed) allowing detection of the actuator state. Such mechanical switches have a short lifetime which requires frequent inspection/repair. They also cause unwanted noise when they switch.

One alternative solution to the mechanical switch might be a magnetic sensor which detects the distance of the lever from the sensor. While such a sensor would be contactless and therefore likely have a longer lifetime and a reduced noise, such sensors are typically expensive.

DE 10 2006 035225 A1 which discloses the preamble of claim 1, teaches an actuator including a control device with control terminals that are provided with signal detectors for detecting a voltage signal across the coil device when it is in a non-energized state for producing a detection signal corresponding to an armature movement in the non-energized state.

EP 3 617 120 A1, which discloses the preamble of claims 1 and 15, teaches an overspeed safety system including a safety brake engageable with a guide rail and an electromechanical actuator and connected to a temporary power supply to provide power in the event of a power failure.

WO 2019/197226 A1 teaches a brake unit configured to brake an elevator car within an elevator shaft that is controlled by a control unit.

Summary

According to a first aspect of the present disclosure there is provided an electronic safety actuator for an elevator safety brake according to claim 1.

The inductance of the solenoid is dependent on the magnetic field in which it is situated, which is in turn affected by the permanent magnet. Thus as the proximity of the permanent magnet to the solenoid changes, the inductance of the solenoid changes (increases or decreases). In certain examples, when the permanent magnet is proximate to the solenoid, the inductance of the solenoid is lower than when the permanent magnet is distal from the solenoid. In other words, the distance of the permanent magnet from the solenoid affects the inductance of the solenoid.

It has been recognised that the change in inductance that occurs in the solenoid of an elevator safety actuator is significant enough to be measurable electronically and that this measurement can be used to determine the position of the permanent magnet and thus of the safety actuator. Such measurement can therefore take the place of the mechanical switch that has previously been used and without requiring a new expensive magnetic detector to be installed in its place. Instead, the position of the actuator can be determined using the existing components together with a new and inexpensive measurement circuit as part of the actuator control circuit.

The solenoid and permanent magnet can be arranged to operate in different ways. In some examples the permanent magnet remains attached to the solenoid in the first position (proximate to the solenoid) even when there is no power to the solenoid, i.e. it is magnetically attracted to the solenoid to hold it in that position. To activate the actuator, a current is supplied to the solenoid so as to repel the permanent magnet and drive it towards the second position on the guide rail (where it then magnetically attaches so as to cause engagement of the safety brake). This arrangement is particularly convenient as it does not require power to be supplied to the solenoid continually, but rather only requires power to be supplied in the event of needing to engage the brake. Such power can be supplied by a capacitor so that the brake remains operable in the event of a power failure. However, this disclosure also applies to other arrangements, e.g. those in which the solenoid is continually powered to hold the permanent magnet in place (possibly against a separate biasing force such as may be provided by a spring). In such examples a loss of power will result in the loss of attractive force from the solenoid and the consequent bias of the permanent magnet towards the second position in which the brake will be engaged. In each example the inductance of the solenoid will change due to the movement of the magnet and consequently the measurement circuit can detect that change of inductance so as to detect the position of the permanent magnet.

In some examples the measurement circuit is arranged to compare the measured inductance with a predefined threshold value selected such that the inductance of the solenoid is below the predefined threshold value when the permanent magnet is in the first position and the inductance of the solenoid is above the predefined threshold value when the permanent magnet is in the second position. The predefined threshold allows an easy comparison to be made so as to determine the position of the permanent magnet. As the permanent magnet is essentially bistable, it will be in one of the two positions (first or second) and therefore the threshold can be used to separate them into the position in which the inductance is greater than the threshold and the position in which the inductance is less than the threshold. It has been found that the change of inductance between these two positions allows the threshold to be easily located between them so that it can reliably separate the two possible measurements.

The predefined threshold value may be determined through calibration and can be set prior to installation of the electronic safety actuator. The exact inductance values of the two positions will vary depending on certain factors such as the distance that the permanent magnet moves between the two positions, the strength of the permanent magnet, the strength of the solenoid, etc. However, all of these factors will be dependent only on the particular design and can therefore be precalculated or can be measured via calibration tests so that the predefined threshold can be set and programmed into the device. In alternative examples, calibration can be performed after installation as part of a test procedure that measures the inductance in each position and sets the predefined threshold between the two measurements. Such a calibration procedure can of course be carried out at regular intervals to update the predefined threshold to accommodate changing factors such as temperature, degrading magnetic field strength or wear of components. This calibration procedure can be done manually by a technician or can be carried out automatically.

Any technique for measuring the inductance of the solenoid can be used. However, in some examples the measurement circuit is arranged to measure the inductance of the solenoid by changing a current through the solenoid and integrating the voltage across the solenoid to produce a voltage integral measurement. When the current through the solenoid changes, the solenoid generates a voltage across it to oppose the change. That voltage is proportional to the rate of change of the current. When the voltage across the solenoid is integrated over time, the resulting integral is proportional to the inductance of the solenoid. Therefore in some examples the measurement circuit includes an integrator that integrates the voltage across the solenoid. The output of the integrator is then a measurement of the inductance of the solenoid. It will be appreciated that the absolute value of the integration is not important and may include some scaling factors. However, all that is required is to distinguish the two inductances of the first and second positions of the permanent magnet, so only the relative values are important.

After the current change has been applied to the solenoid, the integrated voltage output will start to increase and will continue to increases as long as there is a voltage across the solenoid. The voltage across the solenoid (in response to a step current change) will decrease exponentially with time. When the voltage has decreased to substantially zero, the integrated voltage will have reached a substantially constant peak value. This peak value will then remain stable in time and is thus the most convenient value to measure consistently. Therefore in some examples the measurement circuit samples a peak value of the voltage integral measurement at a first time after the applied current change. The first time may be selected such that the voltage integral measurement has substantially reached its peak. Given that the integral output changes significantly and rapidly in the early stages and then plateaus at its peak for a relatively long time (relative to the time taken for the initial rise), the first time period can be selected to be a point in time at which the integral output is expected to have reached its peak value. This time can be predicted or determined experimentally for a given set up or design (e.g. for a given solenoid and current change). The first time can therefore be a predetermined value. In other examples the peak value may be sampled at a time determined in other ways, e.g. by detecting that the rate of increase of the integral output has reduced below a certain value, thereby indicating that the plateau has been reached.

In some examples, the measurement circuit may sample the voltage across the solenoid at a second time. The second time may be selected such that the voltage across the solenoid has substantially no component due to the inductance of the solenoid. At such time the voltage across the inductor is primarily due to the resistance of the solenoid coil and the current through it. Detection of an appropriate voltage at this time indicates that the measurement circuit is functioning correctly. For example, if any components of the measurement circuit fail then no current (or an excess current) could flow through the measurement circuit leading to an unexpected inductor voltage drop. This could be a zero voltage in the case of a circuit break in the measurement circuit, or it could be an unusually high voltage drop if an excess current is flowing. Either scenario could indicate a failure of the measurement circuit which can be used to take appropriate action such as signalling the need to repair or replace the actuator and perhaps the need to remove the elevator car from service until repair has been effected. Therefore in some examples the measurement circuit may be arranged to compare the voltage measurement at the second time with a second predefined threshold and to output an error signal based on the comparison. Two or more thresholds may be used, e.g. to detect different scenarios, such as one threshold to indicate a voltage that is lower than expected and another threshold to indicate a voltage that is higher than expected (i.e. that the voltage lies outside an acceptable range). The second time may be any time that the inductor is not generating any substantial voltage due to changing current and thus the second time can be selected to be either before or after the measurement of inductance. In some examples the second time may be later than the first time, measured with respect to the start of the applied measurement current.

Any suitable integrator circuit can be used to determine the voltage integral across the solenoid. For example the voltage could be sampled at a high sampling rate by an ADC and the samples summed to generate the integral. However, in some examples the measurement circuit is arranged to measure the voltage integral using an analogue integrator. An analogue integrator is particularly easy and inexpensive to include in the measurement circuit and therefore provides a convenient solution. For examples a simple series-connected RC integrator can be used where the input voltage is applied across the two series-connected components and the integral output is taken across the capacitor. Such an analogue integrator's output will decay over time. The measurement circuit may therefore be arranged to measure the voltage across the solenoid at the second time by measuring the analogue integrator output after it has substantially decayed to a constant. This arrangement is particularly convenient as it allows the voltage measurements at both the first time and the second time to be taken from the same source, i.e. both taken from the integrator, even though the measurement at the second time is not actually an integral measurement.

The voltages measured at each of the first time and the second time may be compared with thresholds in any convenient manner. For example they may be compared to threshold voltages in an analogue comparator circuit. However, in some examples the voltages are sampled by an analogue to digital converter (ADC) and can then be compared digitally with stored digital reference values (e.g. thresholds) as well as being readily output and/or stored for diagnostic purposes.

In some examples the current change in the solenoid that is used for measurement is in the same direction as a current change that would cause the actuator to move the permanent magnet from the first position to the second position. The magnitude of the current change used for measurement is preferably not large enough to move the permanent magnet from the first position to the second position. An advantage of this arrangement is that the current change used for measurement of the inductance of the solenoid should not cause actuation of the safety actuator (and therefore should not cause engagement of the brake). In other words, if the permanent magnet is in the first position when the measurement is made then it should remain in the first position after the measurement has been completed. However, as the current change that is used for the measurement is in the same direction as the current change that would cause the permanent magnet to move, if the current change used for measurement is unexpectedly large (e.g. due to a fault) then it will cause movement of the permanent magnet and correspondingly activation of the actuator and engagement of the brake. In other words failure of the measurement circuit fails to a safe scenario in which the elevator car is brought to a stop.

As discussed above, the solenoid may be arranged to apply a current to repel the permanent magnet from the first position to the second position, or the solenoid may be continually supplied with current to hold the permanent magnet in the first position, releasing it to the second position upon a drop in current. In both cases the change in current used for measurement is in the same direction as the change used for actuation. So in the former case, the default is for no current to flow through the solenoid, but the measurement circuit supplies a small current through the solenoid in the direction that creates a magnetic field that will repel the permanent magnet. However, the measurement current is small enough that the magnetic field so created is not strong enough to move the permanent magnet away from the first position. Similarly, in the latter case, the default is for a current to pass through the solenoid strong enough to hold the permanent magnet in the first position through magnetic attraction. The change in current for measurement would be a drop in that current of a magnitude small enough that the solenoid still provides a strong enough magnetic field to hold the permanent magnet in the first position.

In some examples the measurement circuit comprises a measurement switch and a resistor in parallel with a trip switch of the actuator. The trip switch of the actuator is used as part of the safety controls that trigger actuation of the actuator when it is desired to engage the brake, e.g. in an emergency stop situation. When the trip switch changes conducting state, there will be a large change in current through the solenoid causing movement of the permanent magnet from the first position to the second position as discussed above. The measurement switch is used to trigger the inductance measurement and, as it is in parallel with the trip switch, it also causes a corresponding change in current when the measurement switch changes state. However, the resistor in series with the measurement switch reduces the magnitude of that current change so as to keep it below the level that would cause movement of the permanent magnet as discussed above.

In some examples the trip switch is a thyristor. Thyristors are advantageous as they have a high current capability and they stay on after ignition (so no additional energy is required to keep them on). However, in other examples other power devices such as IGBTs or MOSFETs could be used instead.

The safety actuator may be arranged to operate the measurement circuit at regular intervals so as to make regular checks of the position of the permanent magnet (and thus the state of the actuator). It is desirable to take measurements frequently, but it is necessary to allow resetting of the various capacitors in the measurement circuit (charging or discharging). Also, in the case of an actuator that provides a current pulse to repel the magnet for actuation, the current pulse is typically provided by a large capacitor so that it is still operable in the event of power failure. In such cases, it is also desirable not to drain that capacitor. Applying the measurement current may temporarily cause a very small drop in the charge on that capacitor and therefore the measurement frequency should be low enough that the capacitor recharges fully between measurements. In some typical examples, the measurement can be reliably carried out in under 250 ms, although it will be appreciated that this depends on the components so in some examples the measurement may be accomplished faster or slower. In some examples the measurement frequency (i.e. the rate at which measurements of inductance are acquired) is no more than 4 Hz, optionally no more than 1 Hz, optionally no more than 0.5 Hz, optionally no more than 0.1 Hz. In other examples any measurement frequency may be used.

Safety actuators are often provided in multiples, e.g. at least two, one on each side of the elevator car, each causing brake engagement on a different guide rail. In terms of the actuation circuit, the two solenoids may effectively be arranged in parallel so that the same actuation signal will cause engagement of both brakes simultaneously. In such cases it may be possible to use a single measurement circuit to measure the combined inductance of both solenoids simultaneously. In such cases it may be necessary to distinguish three different inductances; one where both permanent magnets are in the first position, one where both permanent magnets are in the second position, and one where one permanent magnet is in the first position and the other is in the second position. If more than two safety actuators are provided then this principle may be extended accordingly to cover different inductances for different combinations of permanent magnet positions. However, in other examples it may be preferred to provide a separate measurement circuit for each individual actuator, i.e. for each individual solenoid.

In this way the position of each individual actuator can be verified separately and distinctly. The simplicity and relatively low cost of the measurement circuit means that this is still a cost-effective solution.

According to a second aspect of the present disclosure there is provided a method of detecting the position of an electronic safety actuator of an elevator safety brake according to claim 15.

It will be appreciated that all of the preferred and optional features that have been discussed above in relation to the first aspect of the disclosure are also applicable to the second aspect of the disclosure and are therefore also correspondingly preferred and optional features of the second aspect.

Detailed Description

Certain examples of the present disclosure will now be described, by way of example only, with reference to the accompanying drawings in which:

Figures 1a schematically shows a safety actuator with its permanent magnet in a first position;
Figures 1b schematically shows a safety actuator with its permanent magnet in a second position;
Figure 2 shows a circuit diagram of a safety actuator solenoid with a measurement circuit;
Figure 3 shows certain parts of a measurement circuit;
Figure 4 is a graph of the voltage across a solenoid in response to a current change, for various inductances;
Figure 5 shows graphs of the integrator output and the peak value rectification output on a short timescale; and
Figure 6 shows graphs corresponding to the graphs of Figure 5 but on a longer timescale.

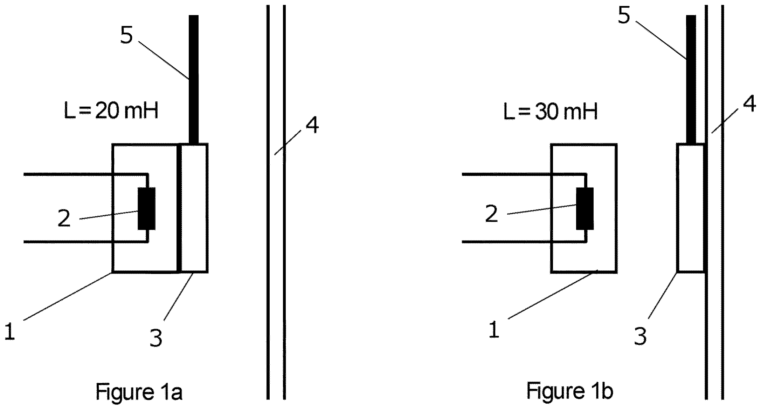

Figure 1a shows an electronic safety actuator 1 for an elevator car. The safety actuator 1 has a solenoid 2 to which a permanent magnet 3 is selectively attached.

In this figure, the permanent magnet 3 is in a first position, proximate to the solenoid 2. In this example the permanent magnet 3 is magnetically attached to the solenoid 2 by virtue of its own magnetic field. The solenoid 2 is not supplied with any electrical current during normal use. In this configuration the permanent magnet 3 is distanced from the guiderail 4 and is not in contact therewith. A mechanical lever 5 attached to the permanent magnet 3 connects to an elevator safety brake (not shown) and when driven parallel to the guide rail 4 causes the safety brake to engage with the guide rail 4 (e.g. via a wedge or roller brake mechanism) so as to bring the elevator car to a stop. In some examples the permanent magnet 3 could be the actual safety brake.

Figure 1b shows the same equipment as in Figure 1b, but with the permanent magnet 3 in a second position, distal from the solenoid 2. In this position the permanent magnet 3 is magnetically adhered to the guide rail 4. In this position, friction between the guide rail 4 and the permanent magnet 3 causes the lever 5 to be driven parallel to the guide rail 4 so as to engage the safety brake and stop the elevator car.

The permanent magnet 3 is moved from the first position of Figure 1a into the second position of Figure 1b by a current being applied to the solenoid 2 so as to create a magnetic field strong enough to repel the permanent magnet 3 away from the solenoid 2 and into magnetic engagement with the guide rail 4. As discussed elsewhere, in other examples the current may be removed from the solenoid to remove or reduce an attractive force holding the permanent magnet 3 in place.

In use, an elevator car would typically have two safety brakes and two electronic actuators, each electronic actuator being as shown in Figures 1a and 1b. In other examples there may be only one safety brake, or more than two safety brakes (and corresponding numbers of electronic actuators). A control unit (not shown) is capable of actuating both safety brakes. When an event occurs that requires engagement of the safety brakes, the control unit operates switches that cause the solenoid 2 to trip the permanent magnet 3 into the rail-engaged position of Figure 1b, thereby lifting the lever 5 that connects to the wedges or rollers of the corresponding safety brake.

In prior art configurations, a mechanical switch is used to detect the movement of the permanent magnet 3 from the first position to the second position (i.e. the movement of the magnet 3 and/or lever 5 causes a physical engagement or disengagement of the mechanical switch), but in the example of Figures 1a and 1b no such mechanical switch is needed. Instead, in the example of Figures 1a and 1b, the inductance of the solenoid 2 is sensed (as described in more detail below). In this example, as indicated in Figure 1a, when the permanent magnet 3 is in the first position, proximate to the solenoid 2, the inductance of the solenoid 2 has a lower value (in this case 20 mH), while when the permanent magnet 3 is in the second position, distal from the solenoid 2, the inductance of the solenoid 2 has a higher value (in this case 30 mH). It will be appreciated that these values are provided merely by way of example and are not limiting on the invention as they depend on the particular size, structure and arrangement of the solenoid 2 and the permanent magnet 3.

When the movement of the permanent magnet 3 and lever 5 from the first position to the second position is detected, the system can take various actions as deemed appropriate. For example the elevator safety chain can be opened leading to an interruption of the power to the drive machine. If only one of two actuators is sensed to have moved from the first position to the second position then the control unit can deploy the other actuator so as to prevent an imbalance in braking by ensuring that both safety brakes are engaged.

In order to reset the safety actuator, the elevator car can be lifted up to release the safety brakes and then the solenoid 2 can be energized in the opposite direction (with a current in the direction opposite to the actuation direction) so as to create a magnetic field strong enough to attract the permanent magnet 3 away from the guide rail 4 and back to the solenoid 2, i.e. from the second position to the first position. As discussed elsewhere, in other examples the solenoid 2 may be deenergized or re-energized as appropriate for the design.

While the description above has been given in relation to an elevator car, it will be appreciated that it is equally applicable to safety brakes and actuators for a counterweight.

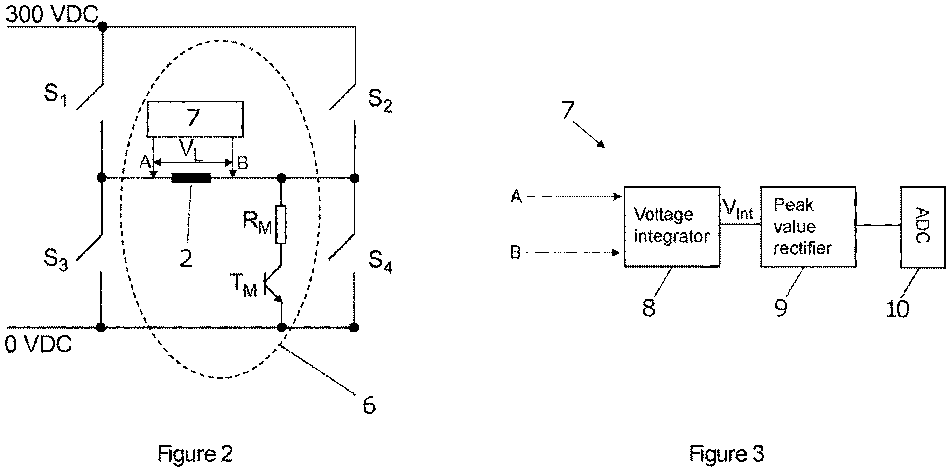

Figure 2 shows a control circuit and measurement circuit for the solenoid 2. The solenoid 2 is located in the middle arm of an H-bridge which is formed from four switches $S_1$ - $S_4$. The switches $S_1$ - $S_4$ may optionally be thyristors. The H-bridge arrangement allows the solenoid 2 to be energized in either direction. By closing switches $S_1$ and $S_4$ the solenoid 2 is energized in a "trip" direction that generates a magnetic field that repels the permanent magnet 3 so as to move it from the first position to the second position so as to engage the safety brakes. On the other hand, by closing switches $S_2$ and $S_3$ the solenoid 2 can be energized in the opposite direction so as to generate a magnetic field that attracts the permanent magnet 3 to draw it away from the guide rail and from the second position back to the first position so as to reset the safety actuator.

The power supply for the circuit of Figure 2 may be provided from a main power supply together with a large capacitor which can provide backup power in the event that the main power supply fails. In Figure 2 the power supply is indicated as 300 V, but again it will be appreciated that this is by way of example only and any desired voltage may be used.

A measurement circuit 6 comprises a measurement circuit branch in parallel with switch (or thyristor) $S_4$ which is part of the "trip" circuit for energizing the solenoid 2 so as to move the permanent magnet 3 from the first position to the second position. The measurement circuit branch comprises a transistor $T_M$ (in this example a MOSFET) in series with a relatively large resistor $R_M$ (in this example a 200 kΩ resistor, although again this is by way of example only).

The measurement circuit 6 also comprises a detecting circuit 7 to detect and measure the voltage $V_L$ across the solenoid 2. The detecting circuit 7 is shown schematically in Figure 3 and is connected across the solenoid 2 as shown in Figure 2 at the points A and B. The detecting circuit 7 includes a voltage integrator 8, a peak value rectifier 9 and an analogue to digital converter (ADC) 10. The voltage integrator 8 takes the voltage difference between points A and B and integrates it with time to produce an integrated voltage output $V_{Int}$. The peak value rectifier circuit 9 captures and stores the peak value of the output $V_{Int}$ from the integrator 8 and holds it for sampling by the ADC 10.

The voltage integrator circuit 8 and the peak value rectifier circuit 9 may be any suitable circuits. However, in some examples the voltage integrator circuit 8 is a simple RC integrator where a capacitor is charged through a series connected resistor and the voltage across the capacitor represents the time integral of the input voltage. In some examples the peak value rectifier circuit 9 may be a simple holding capacitor that is charged by the integrator output and holds the output value long enough for the value to be used (e.g. sampled by ADC 10).

In operation, a measurement current pulse is applied to the solenoid 2 which causes the solenoid to generate a back voltage opposing the change of current. This back voltage is integrated by the integrator circuit 8 causing the output voltage $V_{Int}$ to rise until it reaches a peak value once the inductor's back voltage drops substantially to zero. This peak value represents the time integral of the voltage across the solenoid 2 caused by the applied change in current and is representative of the inductance of the solenoid 2.

After the back voltage of solenoid 2 has decayed down to zero, the integral will correspondingly have reached a peak value and will theoretically be stable (substantially unchanging in time). This output value may be sampled directly by the ADC 10 to give a measurement of the inductance of inductor L (i.e. without the use of the intermediate peak value rectification circuit 9). Therefore by timing the sampling of the ADC 10 so as to read the voltage of integrator circuit 8 after the back voltage has substantially reduced to zero, the ADC 10 can capture the peak of the integral which is representative of the inductance of the solenoid 2.

However, In the case of a simple integrator circuit, such as an RC integrator, the peak voltage on the capacitor of the integrator will start to fade relatively quickly once the peak has been reached. To make the measurement timing more robust and reliable, the peak value rectifier circuit 9 will hold that peak value for longer until the ADC 10 has sampled the peak value. The peak value rectifier circuit 9 can still be a relatively simple circuit, but can be designed with a decay constant that allows a longer time window in which to use the peak integral voltage, e.g. by acquiring a sample via ADC 10.

Now, by comparing the peak integral sample taken by the ADC 10 with a calibrated threshold value stored in a memory, the measurement circuit 6 can determine whether the inductance of the solenoid 2 is above the threshold value or below the threshold value. By setting the threshold value to lie between the inductance of the solenoid 2 with the permanent magnet 3 in the first position and the inductance of the solenoid 2 with the permanent magnet 3 in the second position, the measurement circuit 6 can readily distinguish the two inductances and thereby determine whether the permanent magnet 3 is in the first position or the second position.

In other examples, it will be appreciated that the value of the peak value rectifier 9 can be used via analogue comparisons rather than sampling via ADC 10.

After the back voltage of the solenoid 2 has decayed to zero, the peak integral value $V_{Int}$ of a simple RC integrator will gradually decay until eventually it reaches a minimum value that is representative of the steady state voltage across the solenoid 2, which in turn is now dependent only on the resistance of the solenoid 2 and the measurement current applied. It may be noted that in the case of a simple peak value rectifier circuit 9, this is also the case as, while the time constant of that circuit is longer, it will still decay, just over a longer time. As this is also a stable (non time-varying) value, it is also useful for diagnostic purposes as it indicates the presence of a correct measurement current through the inductor 2 and the measurement circuit 6. This voltage can also be captured by ADC 10 (either directly from the voltage integrator 8 or via the peak value rectifier 9) by sampling at a second time that is suitably chosen based on the expected discharge time of the relevant circuit (e.g. the time constant of the capacitor of the relevant circuit). This second sample can also be compared against one or more thresholds to ensure that it lies within an expected range. Any deviation from the expected range is indicative of a failure of the measurement circuit 6 which can in turn be considered a fault in the electronic safety actuator. Appropriate action can then be taken such as indicating a need for repair or replacement and/or taking the elevator car out of service.

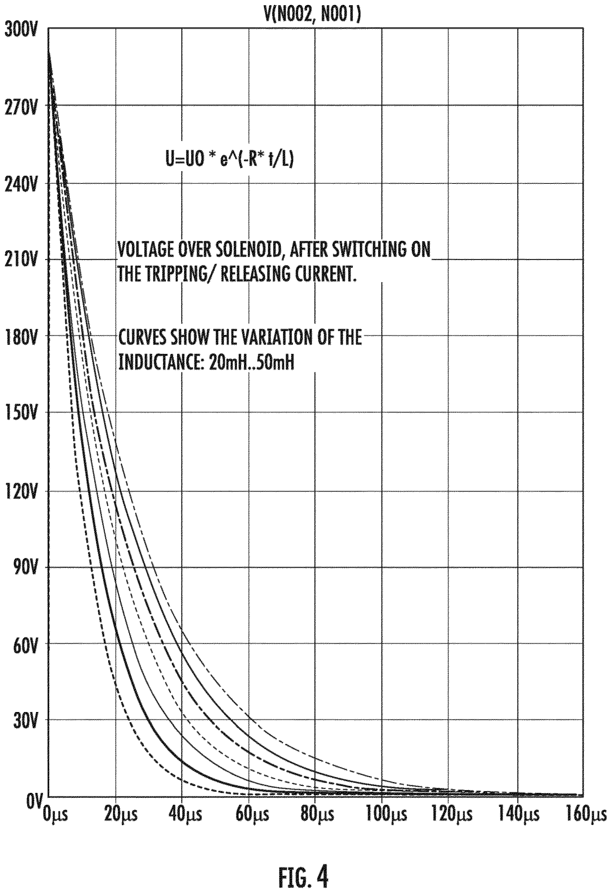

Figures 4, 5 and 6 show graphs that are illustrative of the voltages in the above process in one example. Each graph shows the appropriate voltage curve for a number of inductances ranging from 20 mH through to 50 mH so as to show how the curves and values change with inductance. These are exemplary only, and any values may be used.

Figure 4 shows the back voltage across the solenoid upon commencement of the measurement current. As can be seen, this is an exponentially decreasing voltage according to the formula:

$$V_L = V_0 e^{-Rt/L}$$

Where $V_0$ is the initial voltage, R is the resistance of the measurement resistor $R_M$, and L is the inductance of the solenoid 2. The voltage starts around 300 Volts in this example and decays exponentially down to substantially zero in a time period of from around 60 to 140 microseconds, depending on the inductance.

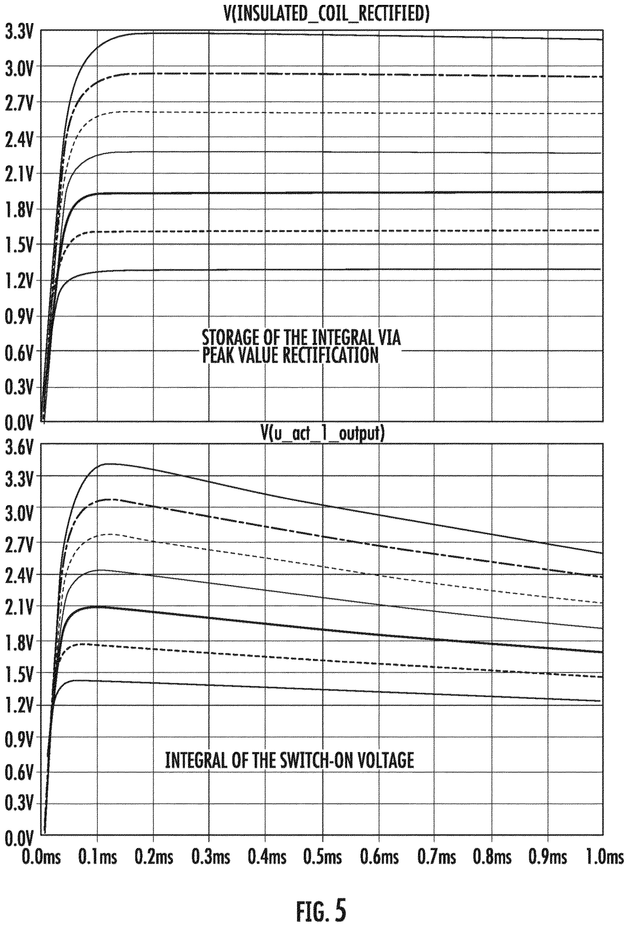

Figure 5 shows two graphs on a timescale of 0 to 1 millisecond after the measurement current pulse. The lower graph shows the output $V_{Int}$ of the voltage integrator circuit 8, again for each of a number of different inductances. As can be seen, the peak integral value is reached after around 0.5 to 1.5 milliseconds, depending on the inductance, and then starts to decay (the integrator is an RC integrator in this example). The upper graph of Figure 5 shows the output of the peak value rectifier circuit 9 corresponding to the example of the lower graph. From this it can be seen that the peak of $V_{Int}$ is held stable for a much longer period of time, providing a stable measurement window.

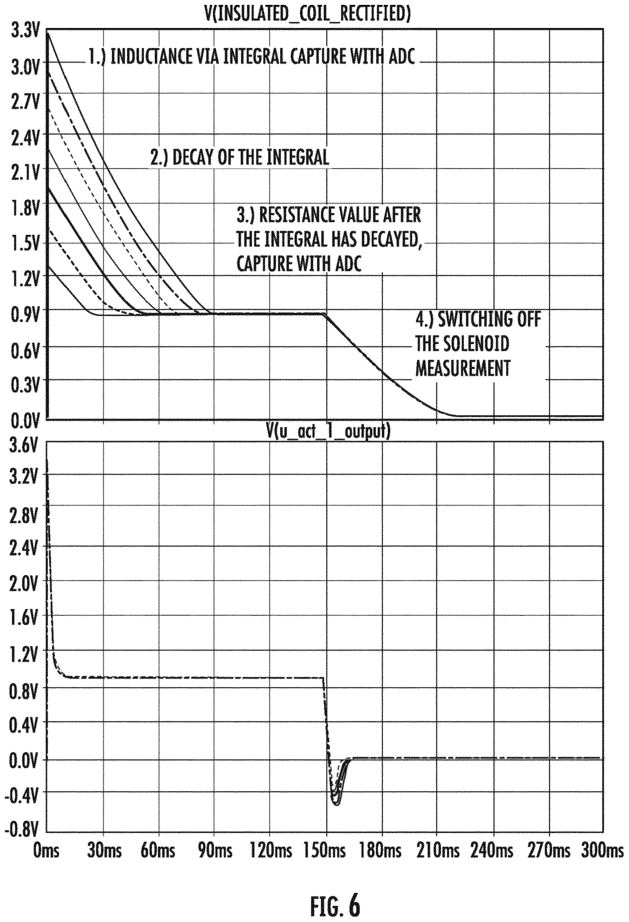

Figure 6 shows the same graphs as those of Figure 5, but on a longer timescale of 0 to 300 milliseconds so that the different decays can be seen (the peak value rectification circuit here is again a relatively simple, capacitor-based circuit). As shown in the lower graph, the output $V_{Int}$ of the integrator circuit 8 decays quickly (on this timescale) down to a constant value (but a non-zero value). As shown in the graph, the residual value is reached after no more than about 10 milliseconds. This residual value is non-zero because there is still a voltage drop across the inductor due to its resistance. In this example the measurement pulse ends at 150 milliseconds, at which point the integrator output voltage $V_{Int}$ quickly returns to zero. This residual voltage can be used to indicate correct functioning of the measurement circuit and to provide an alert in the case of malfunction (e.g. by comparing the voltage to one or more thresholds). For example a zero voltage or a very high voltage here could indicate a fault.

The upper graph of Figure 6 is again the output of the peak value rectifier circuit 9. While this is shown to be substantially constant in the upper graph of Figure 5, it can be seen from Figure 6 that this stored peak value also decays over time as the capacitor of the peak value rectifier circuit 9 discharges. However, that discharge takes place over a much longer period, taking around 20 to 90 milliseconds to reach the residual value, depending on the inductance. At that point the peak value rectifier circuit also remains stable at that residual value until the end of the measurement pulse at 150 milliseconds. The residual value can therefore be measured from the output of the peak value rectifier 9 at any time in this window (from 20/90 milliseconds up to 150 milliseconds). After the measurement pulse has ended, the peak value rectifier output also decays back to zero by around 240 milliseconds.

It will be appreciated that the timescales in these graphs are by way of example only and will vary depending on the particular circuit design. However, they clearly demonstrate the timings in which measurements can be made.

By way of example, in the example shown in Figures 5 and 6, if sampling directly from the integrator circuit 8, a sample could be taken from around 0.1 milliseconds, giving a good estimation of the peak integral value (as shown in the lower graph of Fig. 5). However, that measurement would ideally need to be taken within a relatively short time window (e.g. by around 0.5 - 1 milliseconds) due to the relatively fast decay of the voltage. If sampling from the peak value rectifier circuit 9 instead, then the peak value could again be sampled from around 0.1 milliseconds (as shown in the upper graph of Figure 5), but could reliably be taken within a period of up to 10 - 20 milliseconds (and maybe up to 50 milliseconds or more, depending on the inductances involved) while still distinguishing different inductances. Thus the timing of the sampling is easier with the peak value rectifier circuit 9. Likewise, to sample the residual value for evaluating the measurement circuit 7, the output of the integrator circuit could be sampled any time in the window from about 10 milliseconds to 150 milliseconds (as shown in the lower graph of Figure 6), or, if sampling the output of the peak value rectifier circuit 9, the residual value could be sampled any time in the window from about 90 milliseconds to 150 milliseconds.

While the present disclosure has been described with reference to certain exemplary embodiments, it will be understood by those skilled in the art that various changes may be made without departing from the scope of the appended claims. In addition, many modifications may be made to adapt a particular situation or material to the teachings of the present disclosure without departing from the scope of the appended claims. Therefore, it is intended that the present disclosure not be limited to the particular embodiments disclosed, but that the present disclosure will include all embodiments falling within the scope of the claims.

**Claims**

1. An electronic safety actuator (1) for an elevator safety brake, comprising:

   a solenoid (2); and
   a permanent magnet (3), movable by the solenoid (2) between a first position proximate to the solenoid (2) and a second position distal from the solenoid (2);
   **characterised in that**:
   the electronic safety actuator (1) comprises a measurement circuit (6) arranged to measure the inductance of the solenoid (2) and thereby detect the position of the permanent magnet.

2. An electronic safety actuator (1) as claimed in claim 1, wherein the measurement circuit (6) is arranged to compare the measured inductance with a predefined threshold value selected such that the inductance of the solenoid (2) is below the predefined threshold value when the permanent magnet (3) is in the first position and the inductance of the solenoid (2) is above the predefined threshold value when the permanent magnet (3) is in the second position.

3. An electronic safety actuator (1) as claimed in claim 2, wherein the predefined threshold value is determined through calibration and is set prior to installation of the electronic safety actuator (1).

4. An electronic safety actuator (1) as claimed in any preceding claim, wherein the measurement circuit (6) is arranged to measure the inductance of the solenoid (2) by changing a current through the solenoid (2) and integrating the voltage ($V_L$) across the solenoid (2) to produce a voltage integral measurement.

5. An electronic safety actuator (1) as claimed in claim 4, wherein the measurement circuit (6) samples a peak value of the voltage integral measurement at a first time after the applied current change.

6. An electronic safety actuator (1) as claimed in claim 5, wherein the first time is selected such that the voltage integral measurement has substantially reached its peak.

7. An electronic safety actuator (1) as claimed in claim 5 or 6, wherein the measurement circuit (6) samples the voltage ($V_L$) across the solenoid (2) at a second time, later than the first time.

8. An electronic safety actuator (1) as claimed in claim 7, wherein the second time is selected such that the voltage ($V_L$) across the solenoid (2) has substantially no component due to the inductance of the solenoid (2).

9. An electronic safety actuator (1) as claimed in claim 7 or 8, wherein the measurement circuit (6) is arranged to compare the voltage measurement at the second time with a second predefined threshold and to output an error signal based on the comparison.

10. An electronic safety actuator (1) as claimed in any of claims 7, 8 or 9, wherein the measurement circuit (6) is arranged to measure the voltage integral using an analogue integrator (8) whose output ($V_{Int}$) will decay over time and wherein the measurement circuit (6) is arranged to measure the voltage ($V_L$) across the solenoid (2) at the second time by measuring the analogue integrator (8) output ($V_{Int}$) after it has substantially decayed to a constant.

11. An electronic safety actuator (1) as claimed in any of claims 4 to 10, wherein the current change in the solenoid (2) that is used for measurement is in the same direction as a current change that would cause the actuator (1) to move the permanent magnet (3) from the first position to the second position.

12. An electronic safety actuator (1) as claimed in claim 11, wherein the magnitude of the current change used for measurement is not large enough to move the permanent magnet (3) from the first position to the second position.

13. An electronic safety actuator (1) as claimed in any preceding claim, wherein the measurement circuit (6) comprises a measurement switch ($T_M$) and a resistor ($R_M$) in parallel with a trip switch ($S_4$) of the actuator.

14. An electronic safety actuator (1) as claimed in claim 13, wherein the trip switch ($S_4$) is a thyristor.

15. A method of detecting the position of an electronic safety actuator (1) of an elevator safety brake, the electronic safety actuator (1) comprising a solenoid (2) and a permanent magnet (3) movable by the solenoid (2) between a first position proximate to the solenoid (2) and a second position distal from the solenoid (2);
**characterised in that** the method comprises:
measuring the inductance of the solenoid (2) and thereby detecting the position of the permanent magnet (3).

**Patentansprüche**

1. Elektronischer Sicherheitsaktuator (1) für eine Aufzugsicherheitsbremse, umfassend:

ein Solenoid (2); und
einen Permanentmagneten (3), der durch das Solenoid (2) zwischen einer ersten Position nahe dem Solenoid (2) und einer zweiten Position distal von dem Solenoid (2) bewegbar ist;
**dadurch gekennzeichnet, dass**:
der elektronische Sicherheitsaktuator (1) eine Messschaltung (6) umfasst, die dazu angeordnet ist, die Induktivität des Solenoids (2) zu messen und dadurch die Position des Permanentmagneten zu erkennen.

2. Elektronischer Sicherheitsaktuator (1) nach Anspruch 1, wobei die Messschaltung (6) dazu angeordnet ist, die gemessene Induktivität mit einem vordefinierten Schwellenwert zu vergleichen, der derart ausgewählt ist, dass die Induktivität des Solenoids (2) unterhalb des vordefinierten Schwellenwerts liegt, wenn sich der Permanentmagnet (3) in der ersten Position befindet, und die Induktivität des Solenoids (2) oberhalb des vordefinierten Schwellenwerts liegt, wenn sich der Permanentmagnet (3) in der zweiten Position befindet.

3. Elektronischer Sicherheitsaktuator (1) nach Anspruch 2, wobei der vordefinierte Schwellenwert durch Kalibrieren bestimmt wird und vor dem Installieren des elektronischen Sicherheitsaktuators (1) eingestellt wird.

4. Elektronischer Sicherheitsaktuator (1) nach einem der vorhergehenden Ansprüche, wobei die Messschaltung (6) dazu angeordnet ist, die Induktivität des Solenoids (2) durch Ändern eines Stroms durch das Solenoid (2) und Integrieren der Spannung ($V_L$) über dem Solenoid (2) zu messen, um eine Spannungsintegralmessung zu erzeugen.

5. Elektronischer Sicherheitsaktuator (1) nach Anspruch 4, wobei die Messschaltung (6) einen Spitzenwert der Spannungsintegralmessung zu einem ersten Zeitpunkt nach der angelegten Stromänderung abtastet.

6. Elektronischer Sicherheitsaktuator (1) nach Anspruch 5, wobei der erste Zeitpunkt derart gewählt ist, dass die Spannungsintegralmessung im Wesentlichen ihre Spitze erreicht hat.

7. Elektronischer Sicherheitsaktuator (1) nach Anspruch 5 oder 6, wobei die Messschaltung (6) die Spannung ($V_L$) über dem Solenoid (2) zu einem zweiten Zeitpunkt, der später als der erste Zeitpunkt ist, abtastet.

8. Elektronischer Sicherheitsaktuator (1) nach Anspruch 7, wobei der zweite Zeitpunkt derart gewählt ist, dass die Spannung ($V_L$) über dem Solenoid (2) im Wesentlichen keine Komponente aufgrund der Induktivität des Solenoids (2) aufweist.

9. Elektronischer Sicherheitsaktuator (1) nach Anspruch 7 oder 8, wobei die Messschaltung (6) dazu angeordnet ist, die Spannungsmessung zu dem zweiten Zeitpunkt mit einem zweiten vordefinierten Schwellenwert zu vergleichen und ein Fehlersignal basierend auf dem Vergleich auszugeben.

10. Elektronischer Sicherheitsaktuator (1) nach einem der Ansprüche 7, 8 oder 9, wobei die Messschaltung (6) dazu angeordnet ist, das Spannungsintegral unter Verwendung eines Analogintegrators (8) zu messen, dessen Ausgabe ($V_{Int}$) mit der Zeit abklingen wird und wobei die Messschaltung (6) dazu angeordnet ist, die Spannung ($V_L$) über dem Solenoid (2) zu dem zweiten Zeitpunkt zu messen, indem die Ausgabe ($V_{Int}$) des Analogintegrators (8) gemessen wird, nachdem sie im Wesentlichen auf eine Konstante abgeklungen ist.

11. Elektronischer Sicherheitsaktuator (1) nach einem der Ansprüche 4 bis 10, wobei die Stromänderung in dem Solenoid (2), die für die Messung verwendet wird, in dieselbe Richtung geht wie eine Stromänderung, die den Aktuator (1) veranlassen würde, den Permanentmagneten (3) von der ersten Position in die zweite Position zu bewegen.

12. Elektronischer Sicherheitsaktuator (1) nach Anspruch 11, wobei das Ausmaß der Stromänderung, die für die Messung verwendet wird, nicht groß genug ist, um den Permanentmagneten (3) von der ersten Position in die zweite Position zu bewegen.

13. Elektronischer Sicherheitsaktuator (1) nach einem der vorhergehenden Ansprüche, wobei die Messschaltung (6) einen Messschalter ($T_M$) und einen Widerstand ($R_M$) parallel zu einem Auslöseschalter ($S_4$) des Aktuators umfasst.

14. Elektronischer Sicherheitsaktuator (1) nach Anspruch 13, wobei der Auslöseschalter ($S_4$) ein Thyristor ist.

15. Verfahren zum Erkennen der Position eines elektronischen Sicherheitsaktuators (1) einer Aufzugsicherheitsbremse, wobei der elektronische Sicherheitsaktuator (1) ein Solenoid (2) und einen Permanentmagneten (3) umfasst, der durch das Solenoid (2) zwischen einer ersten Position nahe dem Solenoid (2) und einer zweiten Position distal von dem Solenoid (2) bewegbar ist; **dadurch gekennzeichnet, dass** das Verfahren Folgendes umfasst:
Messen der Induktivität des Solenoids (2) und dadurch Erkennen der Position des Permanentmagneten (3).

**Revendications**

1. Actionneur électronique de sécurité (1) pour frein de sécurité d'ascenseur, comprenant :

   un solénoïde (2) ; et
   un aimant permanent (3), mobile par le solénoïde (2) entre une première position à proximité du solénoïde (2) et une seconde position distale par rapport au solénoïde (2) ;
   **caractérisé en ce que** :
   l'actionneur électronique de sécurité (1) comprend un circuit de mesure (6) conçu pour mesurer l'inductance du solénoïde (2) et détecter ainsi la position de l'aimant permanent.

**2.** Actionneur électronique de sécurité (1) selon la revendication 1, dans lequel le circuit de mesure (6) est conçu pour comparer l'inductance mesurée avec une valeur seuil prédéfinie sélectionnée de telle sorte que l'inductance du solénoïde (2) soit inférieure à la valeur seuil prédéfinie lorsque l'aimant permanent (3) est dans la première position et l'inductance du solénoïde (2) soit supérieure à la valeur seuil prédéfinie lorsque l'aimant permanent (3) est dans la seconde position.

**3.** Actionneur électronique de sécurité (1) selon la revendication 2, dans lequel la valeur seuil prédéfinie est déterminée par étalonnage et est réglée avant l'installation de l'actionneur électronique de sécurité (1).

**4.** Actionneur électronique de sécurité (1) selon une quelconque revendication précédente, dans lequel le circuit de mesure (6) est conçu pour mesurer l'inductance du solénoïde (2) en modifiant un courant traversant le solénoïde (2) et en intégrant la tension ($V_L$) aux bornes du solénoïde (2) pour produire une mesure d'intégrale de tension.

**5.** Actionneur de sécurité électronique (1) selon la revendication 4, dans lequel le circuit de mesure (6) échantillonne une valeur de crête de la mesure d'intégrale de tension un premier moment après la variation de courant appliquée.

**6.** Actionneur électronique de sécurité (1) selon la revendication 5, dans lequel le premier moment est sélectionné de telle sorte que la mesure d'intégrale de tension ait sensiblement atteint son pic.

**7.** Actionneur électronique de sécurité (1) selon la revendication 5 ou 6, dans lequel le circuit de mesure (6) échantillonne la tension ($V_L$) aux bornes du solénoïde (2) à un second moment, ultérieur au premier moment.

**8.** Actionneur électronique de sécurité (1) selon la revendication 7, dans lequel le second moment est sélectionné de telle sorte que la tension ($V_L$) aux bornes du solénoïde (2) n'a pratiquement aucune composante due à l'inductance du solénoïde (2).

**9.** Actionneur électronique de sécurité (1) selon la revendication 7 ou 8, dans lequel le circuit de mesure (6) est conçu pour comparer la mesure de tension au second moment avec un second seuil prédéfini et pour émettre un signal d'erreur basé sur la comparaison.

**10.** Actionneur électronique de sécurité (1) selon l'une quelconque des revendications 7, 8 ou 9, dans lequel le circuit de mesure (6) est conçu pour mesurer l'intégrale de tension à l'aide d'un intégrateur analogique (8) dont la sortie ($V_{Int}$) décroîtra avec le temps et dans lequel le circuit de mesure (6) est conçu pour mesurer la tension ($V_L$) aux bornes du solénoïde (2) au second moment en mesurant la sortie ($V_{Int}$) de l'intégrateur analogique (8) après qu'elle a sensiblement diminué jusqu'à une constante.

**11.** Actionneur électronique de sécurité (1) selon l'une quelconque des revendications 4 à 10, dans lequel la variation de courant dans le solénoïde (2) qui est utilisée pour la mesure est dans la même direction qu'une variation de courant qui amènerait l'actionneur (1) à déplacer l'aimant permanent (3) de la première position vers la seconde position.

**12.** Actionneur électronique de sécurité (1) selon la revendication 11, dans lequel l'amplitude de la variation de courant utilisée pour la mesure n'est pas suffisamment élevée pour déplacer l'aimant permanent (3) de la première position vers la seconde position.

**13.** Actionneur de sécurité électronique (1) selon une quelconque revendication précédente, dans lequel le circuit de mesure (6) comprend un commutateur de mesure ($T_M$) et une résistance ($R_M$) en parallèle avec un commutateur de déclenchement ($S_4$) de l'actionneur.

**14.** Actionneur de sécurité électronique (1) selon la revendication 13, dans lequel le commutateur de déclenchement ($S_4$) est un thyristor.

**15.** Procédé de détection de la position d'un actionneur électronique de sécurité (1) d'un frein de sécurité d'ascenseur, l'actionneur électronique de sécurité (1) comprenant un solénoïde (2) et un aimant permanent (3) mobile par le solénoïde (2) entre une première position à proximité du solénoïde (2) et une seconde position distale du solénoïde (2) ;
**caractérisé en ce que** le procédé comprend :
la mesure de l'inductance du solénoïde (2) et ainsi la détection de la position de l'aimant permanent (3).

L = 20 mH

5

4

2

1

3

Figure 1a

L = 30 mH

5

4

2

1

3

Figure 1b

Figure 2

Figure 3

EP 3 892 580 B1

V(N002, N001)

$U=U0 * e^{(-R* t/L)}$

VOLTAGE OVER SOLENOID, AFTER SWITCHING ON THE TRIPPING/ RELEASING CURRENT.

CURVES SHOW THE VARIATION OF THE INDUCTANCE: 20mH..50mH

FIG. 4

FIG. 5

**V(INSULATED_COIL_RECTIFIED)**

1.) INDUCTANCE VIA INTEGRAL CAPTURE WITH ADC

2.) DECAY OF THE INTEGRAL

3.) RESISTANCE VALUE AFTER THE INTEGRAL HAS DECAYED, CAPTURE WITH ADC

4.) SWITCHING OFF THE SOLENOID MEASUREMENT

**V(u_act_1_output)**

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006035225 A1
- EP 3617120 A1
- WO 2019197226 A1